# EUROPEAN PATENT APPLICATION

(11) **EP 1 520 635 A1**
(43) Date of publication of application: **06.04.2005**
(21) Application number: 04447206.6
(22) Date of filing: 22.09.2004
(51) Int. Cl.: B09C 1/00, B09C 1/08

(54) **Process for the treatment of contaminated sediments**

(30) Priority: 01.10.2003 BE 200300516
(71) Applicant: DEC, 2070 Zwijndrecht (BE)
(72) Inventor: Pensaert, Stany, 9160 Lokeren (BE)
(74) Representative: Gevers, François

(57) **Abstract**

The invention relates to a process for the treatment of soil material, contaminated with polluting substances, in particular with organometallic compounds, wherein the polluting substances are brought into contact with a treatment agent, and wherein the treatment agent is an organic adsorption agent selected such that the water leach ability according to DIN 38414S4 of the treated soil material is ≤ 20% of that of the untreated soil material, and preferably selected from the group of active coal, graphite, carbon black, pit coal, compost, and mixtures thereof.

## Description

The invention relates to a process for the treatment of soil material, contaminated with polluting substances, wherein the polluting substances are brought into contact with a treatment agent, as described in the preamble of claim 1. The invention in particular relates to a process for the treatment of sediments, contaminated with organometallic compounds.

The dry or underwater dredging of sediments, contaminated with polluting substances often produces contaminated dredge slurry, which in many instances needs to be treated in order to allow for its storage or its reuse. Today several techniques exist which may be used to clean up contaminated sediments and other soil material or otherwise reduce the risk associated with the problem of pollution. These known processes usually comprise several steps whereby the contaminated sediments are removed in a first step. Thereafter, the thus collected dredge slurry is subjected to a separation or decontamination technique, known per se. This serves the purpose of removing the polluting substances from the dredge slurry to be treated as much as possible. After this separation- or decontamination treatment the treated dredge slurry is replaced in the original site, reused in a useful manner, or permanently stored in such manner that the remainder of the pollutant, possibly still present therein, substantially stays confined into it.

The separation techniques known per se, such as for instance hydrocycloning, floatation, bioremediation and so on, are expensive however, since they need important investments in thermal techniques for instance, and/or in logistics. Moreover due to the limited efficiency of the known process, the treated dredge slurry still contains remains of polluting substances and therefore the environmental risk is not always sufficiently reduced.

The process according to the invention aims to provide a process for immobilizing polluting substances in soil material contaminated therewith, which is efficient and reduces the environmental risks of contaminated sediments.

The process according to the invention is thereto characterized as described in the characterizing portion of claim 1.

The organic adsorption agent is selected such that the water leach ability of the substantially total amount of polluting substances according to DIN 38414S4 of the treated soil material is ≤ 20% of that of the untreated soil material, more preferably ≤ 10%, still more preferably ≤ 1%.

A treatment agent particularly suitable for the process according to the invention is an organic adsorption agent, selected from the group of active coal (granulated, activated carbon), graphite, carbon black, pit coal, compost, and/or any other material of vegetable organic origin that reduces the water leach ability of the polluting substances in the soil material as described in claim 1, and mixtures thereof. Suitable treatment agents of vegetable origin are for instance coconut pulp and/or fiber, saw dust, and so on.

Surprisingly it turned out that by adding an organic adsorption agent according to the invention to the soil material, a strong immobilization of the polluting substances is achieved as a consequence of the extremely good adsorption of the polluting substances to the organic adsorption agent. Through this, the leach ability from a fluid, in particular from water, is strongly reduced. Proportional to this reduced leach ability the desired reduction of the environmental risks is secured.

The process according to the invention yields extraordinary results in the case of, and is therefore preferably applied for the immobilization of polluting substances from the group of organometallic compounds. Such polluting substances are for instance set free from so-called "antifouling" paint layers of ships, as a result of constant release or resulting from maintenance to the hull. The invention is therefore also particularly suitable for treating dredge slurry from dredging in ports and the like, where intense shipping traffic occurs and ships are subject to maintenance in dry-docks. Organometallic compounds are compounds, which contain carbon-metal bonds, whereby the bond may be substantially ionic, but also covalent. Examples of organometallic compounds with substantially ionic bonding between carbon chain and metal are for instance carbon-sodium and carbon-potassium compounds. Examples of organometallic compounds with substantially covalent bonding between carbon chain and metal are for instance carbon-lead, carbon-tin, carbon-thallium, and carbon-mercury compounds. Examples of organometallic compounds with bonds between carbon chain and metal, which lie between covalent and ionic, are for instance carbon-lithium and carbon-magnesium compounds. Preferably the process according to the invention is applied to sediments containing organic tin compounds. Such contaminants comprise all compounds containing carbon chains and tin atoms. Examples of such compounds include alkyl-, neopentyl-, vinyl-, allyl-, and phenyl tin compounds. The process is in particular suitable for immobilization in contaminated sediments of tributyl tin, dibutyl tin, monobutyl tin, triphenyl tin, diphenyl tin, and monophenyl tin. In the process according to the invention other polluting substances besides the above mentioned organometallic compounds, may be adsorbed, such as for instance chlorinated biphenyl compounds (PCB), heavy metals, polyaromatic hydrocarbons, and so on.
The process according to the invention uses adsorption agents of organic nature to reduce the extraction of organometallic compounds, and preferably organic tin compounds in the contaminated soil material. The term 'organic adsorption agent' is in the context of this application defined as any chemical substance containing carbon and having adsorptive properties. Particularly suitable organic adsorption agents are active coal and/or compost. In the context of this application by compost is meant the product obtained by the controlled decomposition of organic materials such as leaves, grass, food remainders,... by microorganisms. Compost is a crumbly, soil-like material, smelling like soil.

Although the process according to the invention is particularly suitable for the treatment of sediments, it is also applicable to the treatment of other materials, such as for instance contaminated grounds and/or other mineral substances and/or remains of a production process.

The process according to the invention may likewise be applied 'in-situ' as on another site ('ex-situ'), for instance in a processing center. Preferably the process according to the invention is applied in-situ. This has the advantage of not having to remove the soil material to be treated. It is however often easier to apply the process after excavation or dredging of the polluted materials, for instance in a processing center for dredge slurry.

The process for the immobilization of organometallic compounds like organic tin by means of organic adsorption agents is based on the fact that these compounds, like many other organic products, have the property of strongly adsorbing to the adsorption agents added in the process as a result of chemisorption or physisorption.

In standard temperature, pressure and chemical potential conditions, the compounds adsorbed to the surface of an adsorption agent may remain in this condition during a prolonged time interval. This property ensures the durability of the process for the immobilization of contaminants for reducing environmental risks.

The process according to the invention describes the treatment of the contaminated materials, such as for instance sediments, and is not limited to particular processes for mixing the different materials, more in particular the organic adsorption agent and the material from which the sediment and/or soil layer is built. It is indeed possible to mix the different materials by means of mechanical mixing, in which tools such as mixing with the bucket of a crane, mixing with a rotary bucket, all possible classical mixing devices, ... are used. It is also possible to add the organic adsorption agent to the sediment and/or the other soil layers by means of hydraulic injection. In this way the immobilization can be performed both in-situ as ex-situ, in parallel as well as in a production line, prior to as well as during and/or after transport of the materials.

In a first suitable process according to the invention underwater sediment is excavated by means of a dredging method known per se. The excavated sediments, which are contaminated with pollutants, in particular tributyl tin (TBT), are subsequently collected onto the shore and stored on a hermetically sealed storage site to prevent any contamination of the soil. Thereafter they are mixed with a suitable amount of organic additive according to the invention, by means of a so-called rotary bucket. A homogeneous distribution of the additive in the material is achieved by turning the dredge slurry several times with the rotary bucket. The treated materials were subsequently dumped into the water again and reused as soil material on the spot.

Another likewise suitable process comprises the dredging of sediments contaminated with TBT by means of a classical hopper suction dredger, whereby the sediments, suspended in water, are pumped to the shore through a floating pipe. In order to mix the sediment with an organic adsorption agent according to the invention, a watery suspension of this adsorption agent in the suitable concentration is injected into the dredging pipe. Finally the sediment exiting from the pipe is dumped under water to form land reclamation.

In a third suitable process the contaminated sediment is dredged from a pontoon with a crane and stored into a floating tug-pushed dumb barge to transport it to the shore. During storage in said tug-pushed dumb barge the sediment is mixed in with an organic adsorption agent according to the invention, preferably active coal. In such manner the contaminated sediment is prepared to reuse it on land with a strongly reduced environmental risk.

The invention will now be elucidated with the aid of the following examples, without however being limited thereto.

### Examples I to IV

In this realized project underwater sediment was excavated by means of a dredging method known per se. The excavated sediments (about 50 ton), mainly contaminated with tributyl tin (TBT), but also with other pollutants, were collected on shore and subsequently stored on a hermetically sealed storage site to prevent any contamination of the soil. Thereafter they were mixed with organic additives according to the invention in the amounts as indicated in table 1, by means of a so-called rotary bucket. With additive Carbon A an active coal is meant with maximum particle size ≤ 125 µm (completely goes through a sieve with mesh size 125 µm). With additive Carbon B an active coal is meant with maximum particle size ≤ 2000 µm (completely goes through a sieve with mesh size 2000 µm). A homogeneous distribution of the additive in the material was achieved by turning the dredge slurry several times with the rotary bucket. The thus treated materials were subsequently dumped in the water again and reused as soil material on the spot.

The concentration of TBT in the soil material was determined by the following procedure: extraction of the organotin compounds with an organic solvent (hexane, toluene, methyl chloride or similar), followed by derivatization with Grignard reagens, finally analysis with GC-MS (gas chromatography coupled to mass spectroscopy). The initial concentration of TBT was determined by taking about three samples of the untreated dredge slurry. After mixing of the additive according to the invention the concentration of TBT was determined again according to the same method.

The leach ability in water of the contaminant (in this case TBT) was determined by preparing an eluent with water according to DIN 38414S4, and subsequently determining by the concentration of TBT, present in the water means of chromatography (according to the above mentioned method). It is hereby mentioned that the specific chromatographic method to be used depends of course on the type of contaminating substance to be determined. The person skilled in the art can easily determine the suitable method.

The results are given in table 1. From the results it appears that the leach ability in water of the tributyl tin is strongly reduced by the addition of the additives according to the invention, and in many instances even below the required norm of 0.1 µg/l. The initial leach ability in water of tributyl tin from this sediment was 1.8 µg/l.

Further it appears that not only is the leach ability of TBT in water strongly reduced by addition of the organic adsorption agents according to the invention, but that the measured concentrations in the treated material thereof apparently also decrease. This of course is not possible (mass cannot disappear by a physical process). The cause of this apparent decrease in mass lies in the determining method for the concentration of TBT. The determination of concentration of TBT is preceded by an extraction of TBT from the treated dredge slurry by means of a solvent. It appears that even the solvent is not able to remove the TBT, which has been immobilized in the dredge slurry by addition of the organic additive according to the invention. This illustrates the strong adsorption, and therefore the durability of the immobilizing effect of the organic additives on TBT in particular and on other contaminating substances in general.

### Examples V to VII

An amount of 300 g of dredged soil samples from Litouwen were mixed by hand with the aid of a spatula with the organic additives mentioned in table 2 in the amounts indicated.

The concentration of TBT in the soil material and the leach ability in water of the contamination (in this case TBT) were determined as indicated above. The results are given in table 2.

### Examples VIII to X

An amount of 300 g of dredged soil samples from Belgium were mixed by hand with the aid of a spatula with the organic additives mentioned in table 3 in the amounts indicated.

The concentration of TBT in the soil material and the leach ability in water of the contamination (in this case TBT) were determined as indicated above. The results are given in table 3.

From the results given in tables 2 and 3 it appears that alternative organic adsorbents, such as green compost and pit coal dust likewise show a very effective action to reduce the leach ability in water of tributyl tin.

### Comparative Experiments A to F

An amount of 300 g of the same dredged soil samples as in Examples V to VII were mixed by hand with the aid of a spatula with the organic additives mentioned in table 2 in the amounts indicated.

The concentration of TBT in the soil material and the leach ability in water of the contamination (in this case TBT) were determined as indicated above. The results are given in table 2.

From this it appears among others that the use of modified clay, which has been especially commercialized for the same purpose as that of the invention under the name 'E-Clay' (is based on pilated clay), does not show a reducing effect on the leach ability in water of TBT, in contrast with the additives according to the invention.

### Comparative Experiments G to H

An amount of 300 g of the same dredged soil samples as in Examples V to VII were mixed by hand with the aid of a spatula with the organic additives mentioned in table 2 in the amounts indicated.

The concentration of TBT in the soil material and the leach ability in water of the contamination (in this case TBT) were determined as indicated above. The results are given in table 3.

From this it appears that the addition of pH increasing additives, such as calcium, cements, puzzolanic substances, may strongly increase the leach ability in water of TBT. On the other hand this increased leach ability in water is in certain and in occasional cases even compensated to a great extent by supplemental addition of organic adsorption agents, such as active coal and/or compost. This makes, according to the invention, a combined use of solidifying binding agents such as cements and organic adsorption agents according to claim 1 perfectly possible.

The applicant has proposed to reduce the environmental risks associated with the reuse of sediments contaminated with tributyl tin by the application of the process of immobilization with an additive on the basis of organic adsorption agents. The above mentioned small scale tests have also surprisingly shown that de reduction of the extraction of organic tin derivatives is accompanied by a decrease of the extraction of other contaminating substances such as the polyaromatic hydrocarbons and PCB.

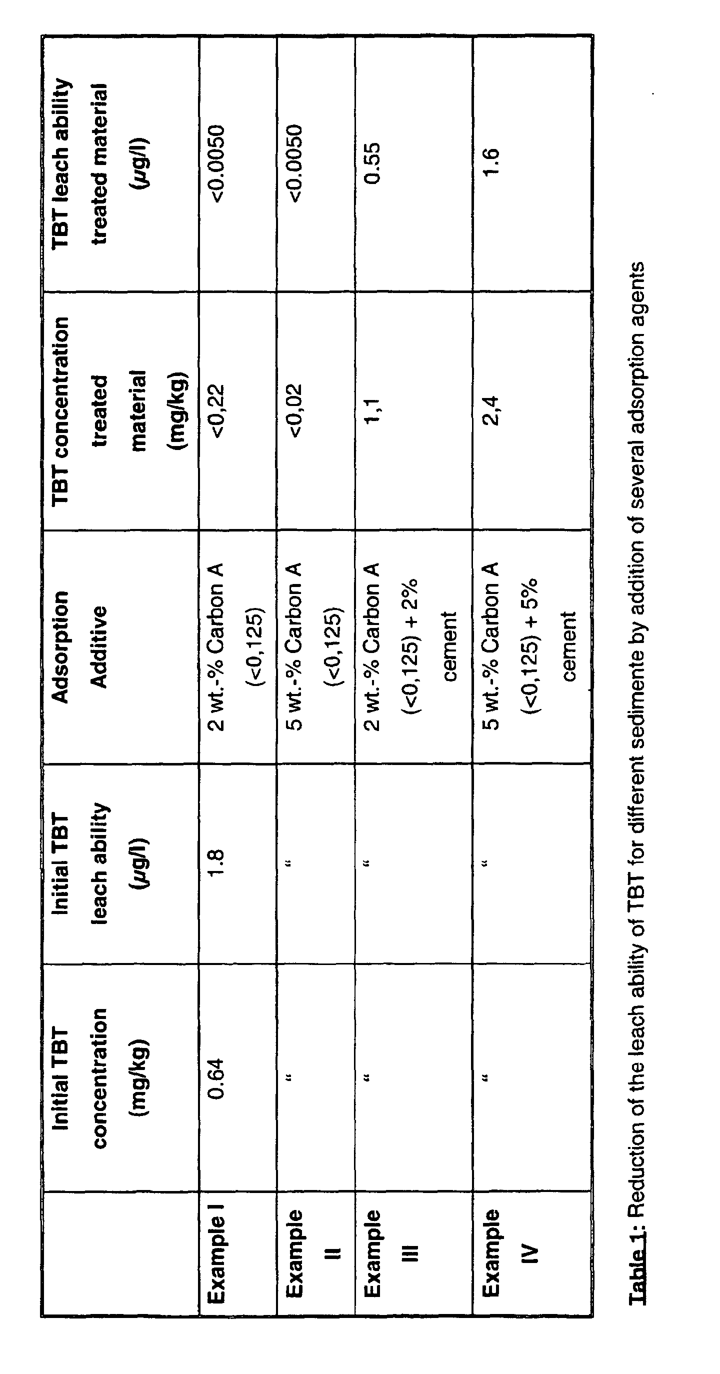

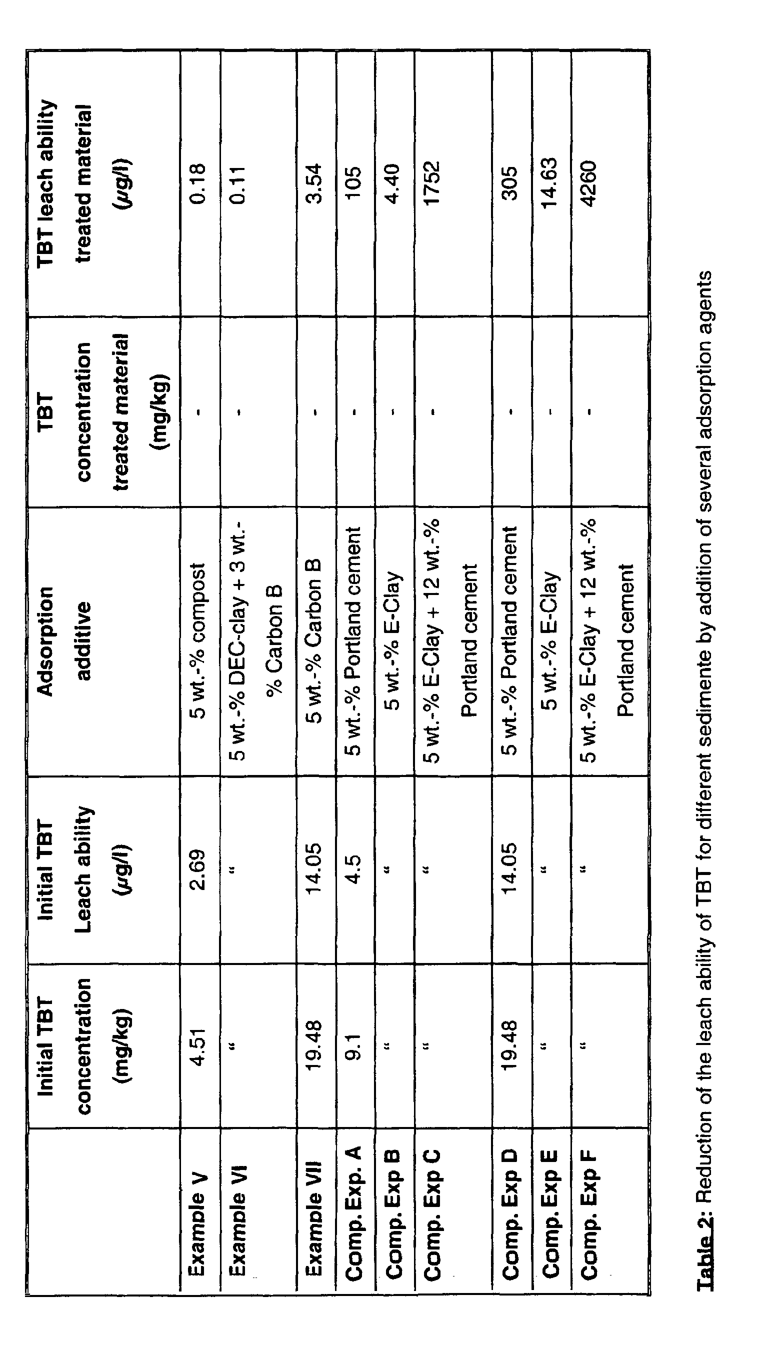

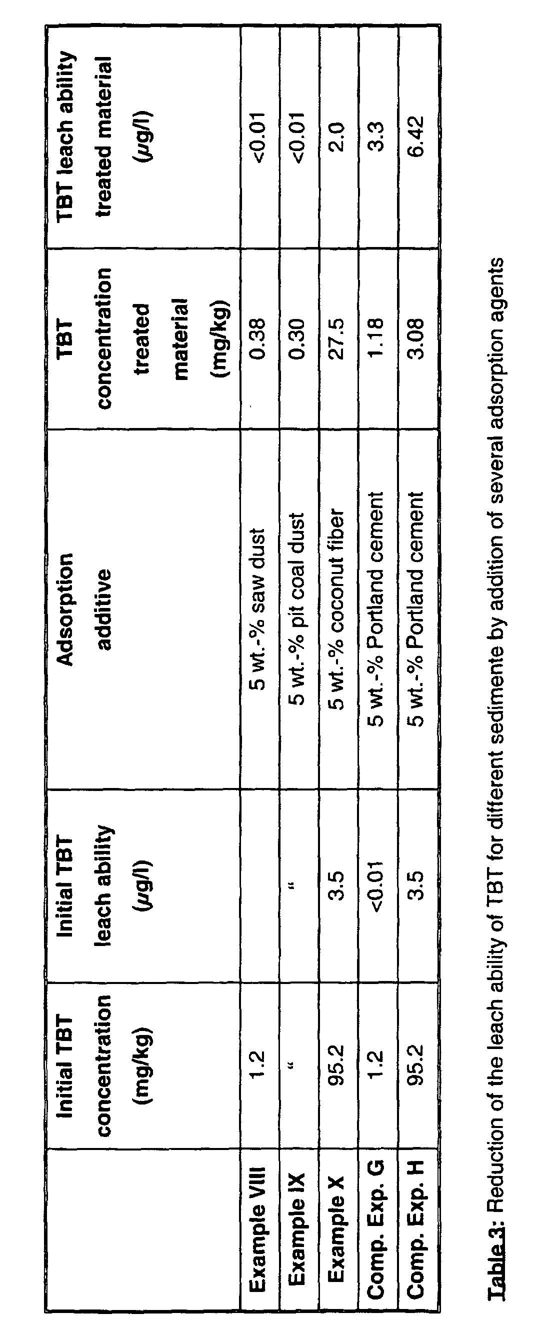

## Claims

1. Process for the treatment of soil material, contaminated with polluting substances, in particular with organometallic compounds, wherein the polluting substances are brought into contact with a treatment agent, **characterized in that**, the treatment agent is an organic adsorption agent selected such that the water leach ability according to DIN 38414S4 of the treated soil material is ≤ 20% of that of the untreated soil material.

2. Process according to conclusion 1, **characterized in that**, the treatment agent is an organic adsorption agent selected from the group of active coal, graphite, carbon black, pit coal, compost, and mixtures thereof.

3. Process according to any one of conclusions 1 or 2, **characterized in that**, the organic adsorption agent is active coal.

4. Process according to any one of conclusions 1 or 2, **characterized in that**, the organic adsorption agent is compost.

5. Process according to any one of conclusions 1 - 4, **characterized in that**, from 0,1 to 10 wt.% of organic adsorption agent is added to the sediment.

6. Process according to any one of conclusions 1 - 4, **characterized in that**, from 1 to 5 wt.% of organic adsorption agent is added to the sediment.
